# EUROPÄISCHE PATENTANMELDUNG

(11) **EP 3 761 010 A1**
(43) Veröffentlichungstag der Anmeldung: **06.01.2021**
(21) Anmeldenummer: 20193216.7
(22) Anmeldetag: 07.11.2012
(51) Int. Cl.: G01N 21/64, G02B 21/00

(54) **VERFAHREN UND VORRICHTUNG ZUM MESSEN DER LEBENSDAUER EINES ANGEREGTEN ZUSTANDES EINER PROBE**

(30) Priorität: 14.11.2011 DE 102011055330
(62) Teilanmeldung aus: 12191584.7
(71) Anmelder: Leica Microsystems CMS GmbH, 35578 Wetzlar (DE)
(72) Erfinder: Widzgowski, Bernd, 69221 Dossenheim (DE)

(57) **Zusammenfassung**

Die Erfindung betrifft ein Verfahren zum Messen der Lebensdauer eines angeregten Zustandes in einer Probe, sowie eine Vorrichtung zum Ausführen eines solchen Verfahrens. Zunächst erfolgen das Erzeugen eines Anregungslichtpulses (8) und das Beleuchten eines Probenbereichs mit dem Anregungslichtpuls (8). Anschließend wird eine erste digitale Datenfolge (25) erzeugt, die den zeitlichen Lichtleistungsverlauf des Anregungslichtpulses (8) repräsentiert und ein erster Schaltzeitpunkt (27) aus der ersten digitalen Datenfolge (25) ermittelt. Außerdem wird das von dem Probenbereich ausgehende Detektionslicht (18) als mindestens ein Photonenereignis mit einem Detektor (20) detektiert und eine zweite digitale Datenfolge (26) erzeugt, die den zeitlichen Lichtleistungsverlauf des Detektionslichtes repräsentiert, sowie ein zweiter Schaltzeitpunkt (28) aus der zweiten digitalen Datenfolge (26) ermittelt. Schließlich erfolgt das Berechnen der zeitlichen Differenz zwischen dem ersten und dem zweiten Schaltzeitpunkt (27,28).

## Beschreibung

Die Erfindung betrifft ein Verfahren zum Ermitteln eines zeitlichen Lichtleistungsverlaufs von aus einem Probenbereich ausgehenden Detektionslicht, sowie eine Vorrichtung zum Ausführen eines solchen Verfahrens. Das erfindungsgemäße Verfahren und/oder die erfindungsgemäße Vorrichtung können zum Messen der Lebensdauer eines angeregten Zustandes in einer Probe genutzt werden, insbesondere zum Messen einer Fluoreszenzlebensdauer.

Die Erfindung betrifft außerdem eine Vorrichtung zum Ermitteln eines zeitlichen Lichtleistungsverlaufs von aus einem Probenbereich ausgehenden Detektionslicht mit einer Lichtquelle zum Erzeugen eines Anregungslichtpulses zum Beleuchten eines Probenbereichs mit dem Anregungslichtpuls und mit einem Detektor zum Detektieren des von dem Probenbereich ausgehenden Detektionslichtes.

Durch Untersuchen der Lebensdauer der angeregten Zustände einer mit einem oder mehreren Fluoreszenzfarbstoffen markierten Probe können wichtige Erkenntnisse über die Eigenschaften der Probe gewonnen werden. Insbesondere bei der Verwendung mehrerer Fluoreszenzfarbstoffe können mithilfe der Fluorescence Lifetime Imaging Microscopy (FLIM) beispielsweise Erkenntnisse über einen untersuchten Probenbereich, wie die Zusammensetzung oder dessen Umgebung, gewonnen werden. So kann beispielsweise in der Zellbiologie durch Messung der Lebensdauer der Fluoreszenzfarbstoffe indirekt auf die Kalziumkonzentration in einem Probenbereich geschlossen werden.

Es gibt eine Reihe von Methoden zur Messung der Lebensdauer der angeregten Zustände von Fluoreszenzfarbstoffen. Einige dieser Methoden sind in den Kapiteln 4 und 5 des Lehrbuchs von Joseph R. Lakowicz, "Principles of Fluorescence Spectroscopy", Kluwer Academic/Plenum Publishers, second edition, 1999, ausführlich beschrieben. Beispielsweise ist es möglich, die Leistung des Anregungslichtes zeitlich zu modulieren, um aus der Phasenverzögerung des Emissionslichtes auf die Lebensdauer des angeregten Zustandes zu schließen.

Es ist auch möglich, die Fluoreszenzfarbstoffe mit kurzen Lichtpulsen anzuregen, um elektronisch den zeitlichen Versatz der Emissionslichtpulse zu messen. Beispielsweise ist aus DE 10 2004 017 956 A1 ein Mikroskop zur Untersuchung der Lebensdauer angeregter Zustände in einer Probe mit mindestens einer Lichtquelle, die Anregungslicht erzeugt, und mit mindestens einem Detektor, der von der Probe ausgehendes Detektionslicht empfängt, bekannt. Das Mikroskop ist dadurch gekennzeichnet, dass die Lichtquelle einen Halbleiterlaser beinhaltet, der gepulstes Anregungslicht emittiert, wobei eine Einstellvorrichtung zur Einstellung der Pulsrepetitionsrate auf die spezifischen Lebensdauereigenschaften der Probe vorgesehen ist.

Insbesondere die zur Datenauswertung erforderliche Elektronik wird - oft in Form von PC-Einsteckkarten - kommerziell angeboten. Eine solche Zeitmesskarte hat jedoch - abgesehen von dem hohen Preis - den Nachteil einer sehr langen Totzeit, so dass sie nach dem Anregen der Probe nur das Eintreffen des ersten Detektionslichtpulses (erstes Detektionsphoton) erfassen kann und danach für einen erheblichen Zeitraum "blind" ist. Letztlich bleibt ein wesentlicher Teil der Informationen, die das von der Probe ausgehende Detektionslicht beinhaltet, dem Anwender verborgen.

Darüber hinaus ist eine hohe Repetitionsrate von Anregungspulsen und damit ein häufiges Messen innerhalb eines Messzeitraumes nicht möglich. Tatsächlich liegt die erzielbare Messrate weit unter den üblichen Repetitionsraten von kommerziell erwerbbaren Pulslasern. Aus diesem Grund dauert es üblicherweise sehr lange, bis ausreichend viele Daten aufgenommen worden sind, um beispielsweise eine FLIM-Abbildung zu erzeugen.

Es ist daher die Aufgabe der vorliegenden Erfindung, ein Verfahren anzugeben, das es erlaubt, genauere Messergebnisse in kürzerer Zeit zu erzielen.

Diese Aufgabe wird durch ein Verfahren gelöst, das durch folgende Schritte gekennzeichnet ist:
a. Erzeugen eines Anregungslichtpulses und Beleuchten eines Probenbereichs mit dem Anregungslichtpuls,
b. Erzeugen einer ersten digitalen Datenfolge, die den zeitlichen Lichtleistungsverlauf des Anregungslichtpulses repräsentiert,
c. Ermitteln eines ersten Schaltzeitpunktes aus der ersten digitalen Datenfolge,
d. Detektieren des von dem Probenbereich ausgehenden Detektionslichtes mit einem Detektor,
e. Erzeugen einer zweiten digitalen Datenfolge, die den zeitlichen Lichtleistungsverlauf des Detektionslichtes repräsentiert,
f. Ermitteln eines zweiten Schaltzeitpunktes aus der zweiten digitalen Datenfolge und
g. Berechnen der zeitlichen Differenz zwischen dem ersten und dem zweiten Schaltzeitpunkt.

Es ist die weitere Aufgabe der vorliegenden Erfindung, eine Vorrichtung anzugeben, die es erlaubt, genauere Messergebnisse in kürzerer Zeit zu erzielen.

Die weitere Aufgabe wird durch eine Vorrichtung der eingangs genannten Art gelöst, die dadurch gekennzeichnet ist, dass eine Steuerungsvorrichtung vorgesehen ist,
a. die eine erste digitale Datenfolge, die den zeitlichen Lichtleistungsverlauf des Anregungslichtpulses repräsentiert, erzeugt,
b. die aus der ersten digitalen Datenfolge einen ersten Schaltzeitpunkt ermittelt,
c. die eine zweite digitale Datenfolge erzeugt, die den zeitlichen Lichtleistungsverlauf des Detektionslichtes repräsentiert,
d. die aus der zweiten digitalen Datenfolge einen zweiten Schaltzeitpunkt ermittelt und
e. die die zeitliche Differenz zwischen dem ersten und dem zweiten Schaltzeitpunkt berechnet.

Erfindungsgemäß wurde unter anderem erkannt, dass über den Zeitpunkt des Eintreffens eines ersten Photons hinausgehende Informationen nur dann erhältlich sind, wenn die die Signale verarbeitende Steuerungsvorrichtung in der Lage ist, auch die Photonenereignisse zu erfassen, die zeitlich nach dem Eintreffen des ersten Photons auftreten, jedoch demselben Anregungslichtpuls zuzuordnen sind. Weiter wurde erkannt, dass dies dadurch erreicht werden kann, dass die analogen Messsignale sofort in digitale Zahlenfolgen übersetzt werden.

Die Erfindung ermöglicht in vorteilhafter Weise insbesondere zyklisch sich wiederholende Messungen mit einer Repetitionsfrequenz von 80 MHz und mehr, wie sie handelsübliche Pulslaser aufweisen. Darüber hinaus können genauere Informationen über das Lebensdauerverhalten der Probe gewonnen werden, weil - insbesondere aufgrund der Schnelligkeit der Informationsverarbeitung - nicht lediglich jeweils nur der Zeitpunkt des Eintreffens des jeweils ersten Photons ermittelt wird, sondern - geeignete Anregungslichtleistung vorausgesetzt - nahezu jedes Photonenereignis.

Bei einer besonderen Ausführung des Verfahrens ist vorgesehen, dass der Anregungslichtpuls einem Primärlichtpuls entstammt, von dem ein Teil einem Anregungsdetektor zugeführt wird, der ein erstes analoges elektrisches Signal erzeugt, dessen zeitlicher Amplitudenverlauf vom zeitlichen Verlauf der Lichtleistung des Teils des Primärlichtpulses abhängt und dass das erste analoge elektrische Signal zum Erzeugen der ersten digitalen Datenfolge zeitlich - insbesondere in vorgegebenen und/oder vorgebbaren ersten Zeitrasterabschnitten - abgetastet wird.

Insbesondere kann vorgesehen sein, dass die Lichtquelle einen Primärlichtstrahl erzeugt, der mit einem Strahlteiler in einen Anregungslichtstrahl, der die Anregungslichtpulse beinhaltet, und einen Messstrahl aufgespalten wird, wobei ein Anregungsdetektor den Messstrahl empfängt und ein erstes analoges elektrisches Signal erzeugt, dessen zeitlicher Amplitudenverlauf vom zeitlichen Verlauf der Lichtleistung des Messstrahles abhängt und wobei die Steuerungsvorrichtung das erste analoge elektrische Signal zum Erzeugen der ersten digitalen Datenfolge zeitlich - insbesondere in vorgegebenen und/oder vorgebbaren ersten Zeitrasterabschnitten - abgetastet.

Ein besonders schnelles Erzeugen der ersten Datenfolge kann beispielsweise dadurch erreicht werden, dass die erste Datenfolge aus standardisierten elektrischen Signalen, insbesondere Binärziffern, derart erzeugt wird, dass entweder ein unteres standardisiertes Signal (beispielsweise "0") erzeugt wird, wenn die gerade abgetastete Amplitude unterhalb einer festgelegten und/oder festlegbaren ersten Anregungsschwelle liegt, oder ein oberes, vom unteren standardisierten Signal verschiedenes standardisiertes Signal (beispielsweise "1") erzeugt wird, wenn die gerade abgetastete Amplitude oberhalb eine festgelegten und/oder festlegbaren zweiten Anregungsschwelle liegt.

In vorteilhafter Weise kann vorgesehen sein, dass der Detektor ein zweites analoges elektrisches Signal erzeugt, dessen zeitlicher Amplitudenverlauf vom zeitlichen Verlauf der Lichtleistung des Detektionslichtes abhängt und dass das zweite analoge elektrische Signal zum Erzeugen der zweiten digitalen Datenfolge zeitlich - insbesondere in vorgegebenen und/oder vorgebbaren zweiten Zeitrasterabschnitten - abgetastet wird.

Analog wie in Bezug auf die erste Datenfolge kann vorgesehen sein, dass die zweite Datenfolge von standardisierten elektrischen Signalen, insbesondere Binärziffern, derart erzeugt wird, dass entweder ein unteres standardisiertes Signal erzeugt wird, wenn die gerade abgetastete Amplitude unterhalb einer festgelegten und/oder festlegbaren ersten Detektionsschwelle liegt, oder ein oberes, vom unteren standardisierten Signal verschiedenes standardisiertes Signal erzeugt wird, wenn die gerade abgetastete Amplitude oberhalb eine festgelegten und/oder festlegbaren zweiten Detektionsschwelle liegt.

Um möglichst alle Photonereignisse erfassen zu können ist bei einer vorteilhaften Ausführung vorgesehen, dass das erste und/oder das zweite analoge elektrische Signal zur Erzeugung von Datenfolgen - insbesondere von einer Steuerungsvorrichtung - mit einer Abtastfrequenz abgetastet wird, die wesentlich größer ist als die Repetitionsfrequenz. Insbesondere kann vorgesehen sein, dass das erste und/oder das zweite analoge elektrische Signal mit einer Abtastfrequenz abgetastet wird, die mehr als 50 mal, insbesondere mehr als 100 mal, größer ist als die Repetitionsfrequenz. Bei einer besonders vorteilhaften Ausführung wird das erste und/oder das zweite analoge elektrische Signal mit einer Abtastfrequenz abgetastet, die ca. 125 mal größer ist, als die Repetitionsfrequenz. Bei einer besonderen Ausführung wird das erste und/oder das zweite analoge elektrische Signal mit einer Abtastfrequenz von 10 GHz abgetastet, während die Repetitionsfrequenz 80 MHz beträgt.

Um die zeitliche Auflösung zusätzlich zu erhöhen ist bei einer besonderen Ausführung vorgesehen, dass das erste und/oder das zweite analoge elektrische Signal mehrmals abgetastet wird. Insbesondere kann vorgesehen sein, dass das erste und/oder das zweite analoge elektrische Signal mehrmals, jedoch mit einem - insbesondere stufenlos einstellbaren - Zeitversatz abgetastet wird, der kürzer ist, als ein Zeitrasterabschnitt.

Bei einer besonders vorteilhaften Ausführung, die besonders präzise Ergebnisse ermöglicht, wird das erste und/oder das zweite analoge elektrische Signal n mal jedoch mit einem Zeitversatz abgetastet, der dem n-ten Bruchteil eines Zeitrasterabschnitts entspricht. Beispielsweise bei einer doppelten Abtastung wäre demgemäß ein Zeitversatz von der Hälfte der Dauer eines Zeitrasterabschnitts vorzusehen.

Vorzugsweise werden anschließend die Abtastergebnisse der mehrmaligen Abtastungen miteinander zu der ersten Datenfolge bzw. zu der zweiten Datenfolge verrechnet, insbesondere ineinander verkämmt. Insbesondere kann durch mehrmaliges Abtasten und Verrechnen eine Datenfolge für jeweils denselben Messezeitraum erzeugt werden, die - im Vergleich zur einmaligen Abtastung - n-mal mehr Daten beinhaltet und damit einen wesentlich größeren Informationsgehalt aufweist.

Ein besonders schnelles und zuverlässiges Erzeugen der ersten digitalen Datenfolge ist ermöglicht, wenn es beispielsweise mit einer ersten Abtastvorrichtung erfolgt, die einen Komparator und/oder einen Proportionaldiskriminator aufweist. Insbesondere sind dadurch Abtastraten im Bereich von mehreren 10 GBit, beispielsweise von 28 GBit, ohne weiteres möglich. Gleiches gilt in Bezug auf das Erzeugen der zweiten digitalen Datenfolge, das vorteilhaft mit einer zweiten Abtastvorrichtung erfolgt, die ebenfalls einen Komparator und/oder einen Proportionaldiskriminator aufweist. Die Abtastraten können - müssen jedoch nicht notwendigerweise - gleich sein. Vielmehr kann in Abhängigkeit vom jeweiligen Anwendungsfall die Abtastrate zum Erzeugen der ersten digitalen Datenfolge von der Abtastrate zum Erzeugen der zweiten digitalen Datenfolge abweichen.

Bei einer vorteilhaften Ausführung des Verfahrens ist vorgesehen, dass die erste Datenfolge in parallele erste Datenworte umgesetzt wird und/oder dass die zweite Datenfolge in parallele zweite Datenworte umgesetzt wird. Insbesondere kann ein erster Seriell-Parallel-Wandler zum Umsetzen der ersten Datenfolge in parallele erste Datenworte vorgesehen sein. Alternativ oder zusätzlich kann auch vorgesehen sein, dass ein zweiter Seriell-Parallel-Wandler die zweite Datenfolge in parallele zweite Datenworte umsetzt. Eine solche Ausführung hat den besonderen Vorteil, dass die Datenworte in einer parallel arbeitenden Auswerteelektronik schnell und effizient weiterverarbeitet werden können.

Insbesondere kann vorteilhaft vorgesehen sein, dass der erste und/oder der zweite Seriell-Parallel-Wandler Datenworte erzeugt, die jeweils einen Messzeitraum repräsentieren, der mindestens so lang ist, wie der zeitliche Abstand aufeinanderfolgender Anregungslichtpulse.

Besonders vorteilhaft ist es, wenn der erste und/oder der zweite Seriell-Parallel-Wandler Datenworte erzeugt, die einen Messezeitraum repräsentieren, der genau so lang ist, wie der zeitliche Abstand aufeinanderfolgender Anregungslichtpulse; denn dann sind sämtliche Informationen, die zu einem auf einen Anregungslichtpuls zurückzuführenden Messzyklus gehören, jeweils in einem Datenwort zusammengefasst. Dies erleichtert die Handhabung der Daten und erhöht die Schnelligkeit und Effizienz der Auswertung.

In vorteilhafter Weise kann vorgesehen sein, dass - insbesondere von einer Steuerungsvorrichtung - als erster Schaltzeitpunkt derjenige Zeitpunkt festgelegt wird, bei dem innerhalb der ersten Datenfolge und/oder innerhalb eines ersten Datenwortes ein Wechsel von einem unteren standardisierten Signal zu einem oberen standardisierten Signal oder ein Wechsel von einem oberen standardisierten Signal zu einem unteren standardisierten Signal vorliegt. Diese Art der Ermittlung des Schaltzeitpunktes ist besonders schnell.

Alternativ kann vorgesehen sein, dass - insbesondere von einer Steuerungsvorrichtung - als erster Schaltzeitpunkt derjenige Zeitpunkt festgelegt wird, der aus dem Zeitpunkt eines ersten Wechsels von einem unteren standardisierten Signal zu einem oberen standardisierten Signal und aus dem Zeitpunkt eines zweiten Wechsels von einem oberen standardisierten Signal zu einem unteren standardisierten Signal innerhalb der ersten Datenfolge und/oder innerhalb des ersten Datenwortes, insbesondere durch Bildung des arithmetischen Mittels der Zeitabstände der Wechsel, errechnet wird. Diese Art der Ermittlung des Schaltzeitpunktes ist besonders genau.

Analog kann in gleicher Weise die Festlegung des zweiten Schaltzeitpunktes erfolgen. Nämlich dadurch, dass als zweiter Schaltzeitpunkt derjenige Zeitpunkt festgelegt wird, bei dem innerhalb der zweiten Datenfolge und/oder innerhalb eines zweiten Datenwortes ein Wechsel von einem unteren standardisierten Signal zu einem oberen standardisierten Signal oder ein Wechsel von einem oberen standardisierten Signal zu einem unteren standardisierten Signal vorliegt.

Alternativ kann auch in Bezug auf die Festlegung des zweiten Schaltzeitpunktes vorgesehen sein, dass diese - insbesondere von einer Steuerungsvorrichtung - aus dem Zeitpunkt eines ersten Wechsels von einem unteren standardisierten Signal zu einem oberen standardisierten Signal und aus dem Zeitpunkt eines zweiten Wechsels von einem oberen standardisierten Signal zu einem unteren standardisierten Signal innerhalb der zweiten Datenfolge und/oder innerhalb eines zweiten Datenwortes, insbesondere durch Bildung des arithmetischen Mittels der Zeitabstände der Wechsel, errechnet wird.

Eine besonders genaue Information über die Eigenschaften des zu untersuchenden Probenbereichs kann dadurch erzielt werden, dass wenigstens eine Häufigkeitsverteilung mehrerer errechneter zeitlicher Differenzen generiert wird. Die Häufigkeitsverteilung kann beispielsweise beim Anfertigen einer FLIM-Abbildung der Probe verwendet werden.

Insbesondere zur Erzeugung eines Fluorescence-Lifetime-Image kann vorgesehen sein, dass sequentiell aufeinanderfolgend unterschiedliche, insbesondere benachbarte und/oder benachbart in einer Scanzeile angeordnete, Probenbereiche hinsichtlich der Lebensdauer eines angeregten Zustandes untersucht werden. Hierbei ist es zur weiteren Datenauswertung besonders vorteilhaft, wenn den Datenfolgen und/oder Datenworten und/oder Häufigkeitsverteilungen und/oder zeitlichen Differenzen jedes Probenbereichs eine Ortsinformation hinzugefügt wird.

Um sequentiell aufeinanderfolgend unterschiedliche, insbesondere benachbarte, Probenorte untersuchen zu können - insbesondere zu einem Abrastern einer Probe - kann vorteilhaft eine Scaneinrichtung zum Lenken des Anregungslichtes und/oder des Detektionslichtes verwendet werden. Diese kann beispielsweise einen oder mehrere Kippspiegel beinhalten, deren Drehstellung beispielsweise mit Hilfe von Galvanometern einstellbar ist.

Bei einer besonders vorteilhaften Ausführungsform ist eine Scaneinrichtung zum Lenken des Anregungslichtes auf unterschiedliche Probenorte und/oder zum Abrastern einer Probe vorgesehen, wobei die Steuerungsvorrichtung Ortsinformationen bezüglich der jeweiligen Stellung der Scaneinrichtung den Datenfolgen und/oder Datenworten und/oder Häufigkeitsverteilungen und/oder zeitlichen Differenzen jedes Probenbereichs hinzufügt. Aus diesen Daten kann besonders schnell und effizient ein Fluorescence-Lifetime-Image erzeugt werden.

Bei einer ganz besonders zuverlässig und schnell arbeitenden Ausführung sind die Steuerungsvorrichtung und/oder wenigstens eine Abtastvorrichtung und/oder wenigstens einer der Seriell-Parallel-Wandler Bestandteile eines programmierbaren integrierten Schaltkreises, insbesondere eines Field Programmable Gate Array (kurz: FPGA). Eine solche Ausführung hat darüber hinaus den Vorteil, dass sie besonders einfach an die individuellen Randbedingungen anfassbar ist.

Bei einer vorteilhaften Ausführung ist die erfindungsgemäße Vorrichtung Teil eines Scanmikroskops, insbesondere eines konfokalen Scanmikroskops.

Weitere Ziele, Vorteile, Merkmale und Anwendungsmöglichkeiten der vorliegenden Erfindung ergeben sich aus der nachfolgenden Beschreibung eines Ausführungsbeispiels anhand der Zeichnung. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Es zeigen:
- Fig. 1: ein Ausführungsbeispiel eines Scanmikroskops, das eine erfindungsgemäße Vorrichtung aufweist,
- Fig. 2: eine Darstellung des zeitlichen Leistungsverlaufs des Anregungslichts und des Detektionslichts bei sehr niedriger Anregungslichtleistung und bei hoher Anregungslichtleistung,
- Fig. 3: eine Darstellung des zeitlichen Verlaufs des Anregungslichts und des Detektionslicht, sowie eine Darstellung der digitalen Datenfolgen bei einer möglichen Ausführungsform,
- Fig. 4: eine Darstellung des zeitlichen Verlaufs des Anregungslichts und des Detektionslicht, sowie eine Darstellung der digitalen Datenfolgen bei einer anderen möglichen Ausführungsform,
- Fig. 5: eine schematische Darstellung eines Ausführungsbeispiels und
- Fig. 6: eine schematische Darstellung der Abläufe zur Erhöhung der zeitlichen Auflösung bei der Abtastung eines ersten und/oder zweiten analogen elektrischen Signals.

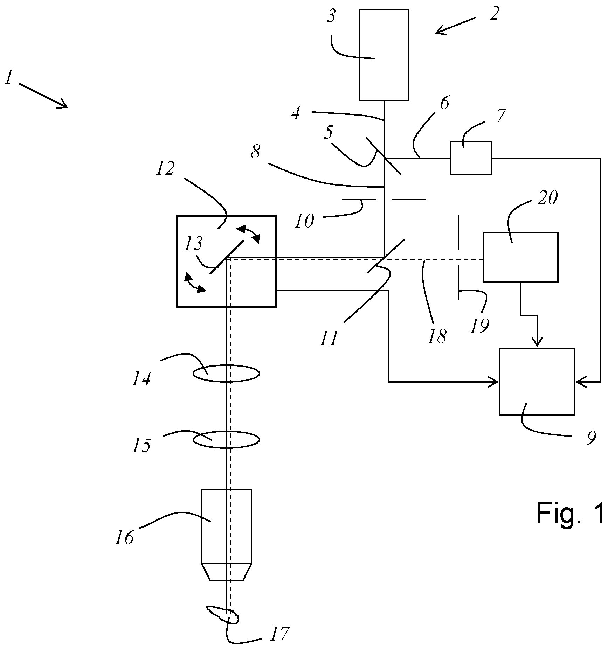

Figur 1 zeigt ein Ausführungsbeispiel eines Scanmikroskops 1, das eine erfindungsgemäße Vorrichtung aufweist. Das Scanmikroskop 1 ist als konfokales Scanmikroskop ausgeführt.

Das Scanmikroskop 1 weist eine Lichtquelle 2 auf, die als Pulslaser 3 zum Erzeugen einer schnellen Folge von Anregungslichtpulsen ausgebildet ist. Konkret erzeugt der Pulslaser 3 einen Primärlichtstrahl 4 der auf einen ersten Strahlteiler 5 trifft. Dort wird der Primärlichtstrahl 4 in einen Messstrahl 6 und einen Anregungslichtstrahl 8 aufgespalten. Der Messstrahl 6 wird auf einen Anregungsdetektor 7 gelenkt. Der Anregungsdetektor 7 erzeugt ein erstes analoges elektrisches Signal, dessen zeitlicher Amplitudenverlauf zum Verlauf der Lichtleistung des Anregungslichtstrahls 8 proportional ist. Das erste analoge elektrische Signal wird eine Steuerungsvorrichtung 9 übergeben. Diese erzeugt aus dem ersten analogen elektrischen Signal eine erste digitale Datenfolge, die den zeitlichen Lichtleistungsverlauf des Anregungslichtes 8 repräsentiert.

Der Anregungslichtstrahl 8 passiert ein Beleuchtungspinhole 10 und gelangt dann zu dem Hauptstrahlteiler 11. Dieser lenkt den Anregungslichtstrahl 8 zu einer Scanvorrichtung 12, die einen kardanisch aufgehängten Scanspiegel 13 beinhaltet. Anschließend gelangt der Anregungslichtstrahl 8 durch die Scanoptik 14 und die Tubusoptik 15 und durch das Mikroskopobjektiv 16 zu der Probe 17. Dort wird ein Probenbereich mit dem Anregungslicht beaufschlagt und so die dort vorhandenen Fluoreszenzfarbstoffe optisch angeregt.

Das von der Probe 17 ausgehende Detektionslicht 18 gelangt auf dem Lichtweg, auf dem der Anregungslichtstrahl 8 von dem Hauptstrahlteiler 11 zu der Probe 17 gelangt ist, in umgekehrter Richtung folgend zum Hauptstrahlteiler 11, passiert diesen und das nachfolgende Detektionspinhole 19 und gelangt schließlich zu einem Detektor 20.

Der Detektor 20 erzeugt ein zweites analoges elektrisches Signal, dessen zeitlicher Amplitudenverlauf vom zeitlichen Verlauf der Lichtleistung des Detektionslichtes 18 abhängt. Das zweite analoge elektrische Signal wird ebenfalls an die Steuerungsvorrichtung 9 übergeben. Dort wird das zweite analoge elektrische Signal zum Erzeugen der zweiten digitalen Datenfolge zeitlich in vorgegebenen zweiten Zeitrasterabschnitten zeitlich abgetastet, wobei die Steuerungsvorrichtung 9 - wie in den folgenden Ausführungsbeispiels noch genauer aufgezeigt wird - die zweite Datenfolge in zeitlicher Korrelation zu der ersten Datenfolge erzeugt.

Die Scaneinrichtung 12 übergibt der Steuerungsvorrichtung 9 Informationen bezüglich der jeweiligen Stellung des Scanspiegels 13, die die Steuerungsvorrichtung 9 jeweils den aus dem ersten analogen Signal und dem zweiten analogen Signal gewonnenen Daten derart zuordnet, dass zurückgeschlossen werden kann, zu welchem Probenort die Daten gehören.

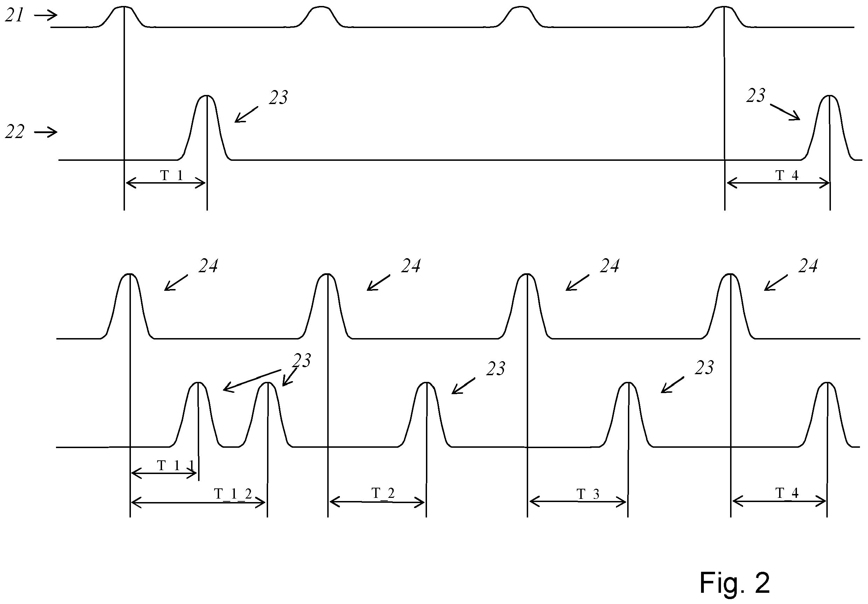

Figur 2 zeigt in der oberen Bildhälfte eine Darstellung des zeitlichen Leistungsverlaufs des Anregungslichts 21 und des zeitlichen Leistungsverlaufs des Detektionslichts 22 bei sehr niedriger Anregungslichtleistung. Es ist zu erkennen, dass lediglich wenige Photonenereignisse 23 zu erfassen sind und detektiert werden, weil die Emissionswahrscheinlichkeit aufgrund der geringen Leistung des Anregungslichts gering ist. Eine solche Messsituation können auch die aus dem Stand der Technik bekannten Vorrichtungen noch bewältigen. Dies trifft jedoch nicht auf die in der unteren Bildhälfte dargestellte Situation (hohe Anregungslichtleistung) zu.

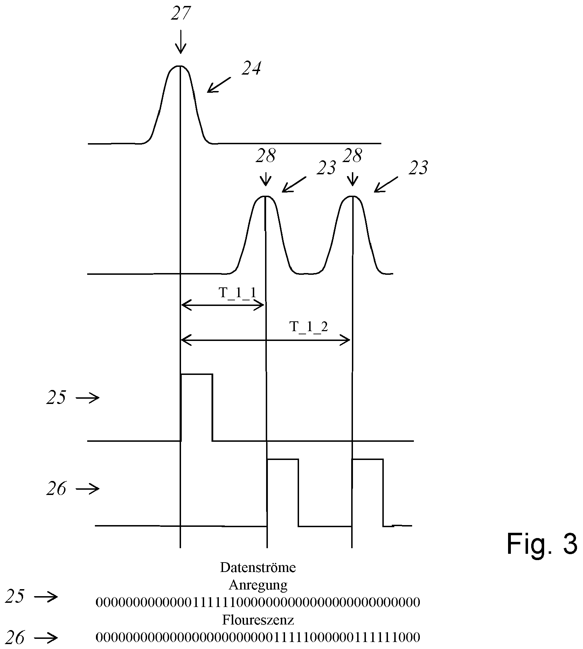

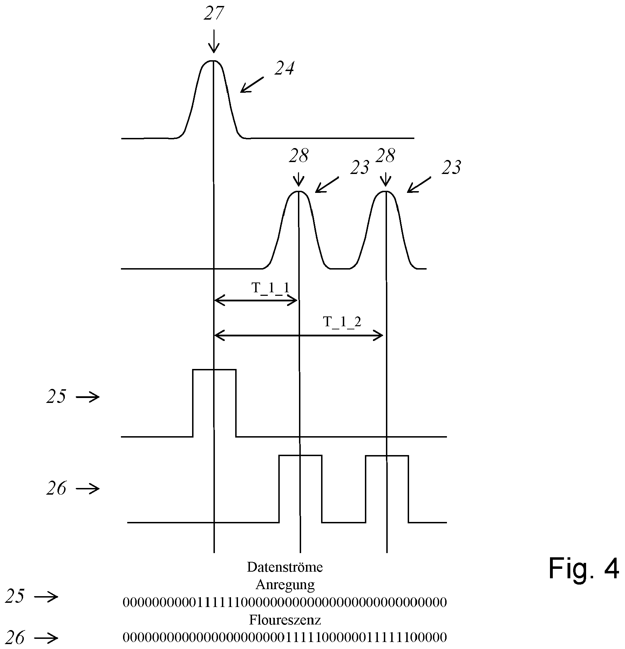

Bei einer hohen Anregungslichtleistung ist die Emissionswahrscheinlichkeit so groß, dass ein Anregungslichtpuls 24 auch mehrere Photonenereignisse 23 auslösen kann. Die Erzeugung einer ersten digitalen Datenfolge 25 und einer zweiten digitalen Datenfolge 26 ist in den Figuren 3 und 4 dargestellt.

Figur 3 und Figur 4 zeigen Ausführungen, bei denen die digitalen Datenfolgen 25, 26 aus standardisierten elektrischen Signalen, nämlich den Binärziffern 0 und 1 derart erzeugt werden, dass entweder ein unteres standardisiertes Signal, also 0, gesetzt wird, wenn die gerade abgetastete Amplitude unterhalb einer festgelegten und/oder festlegbaren ersten Anregungsschwelle liegt, oder ein oberes standardisiertes Signal, also 1, gesetzt wird, wenn die gerade abgetastete Amplitude oberhalb einer festgelegten und/oder festlegbaren zweiten Anregungsschwelle liegt. Die Schwellen können, müssen jedoch nicht notwendigerweise gleich sein.

Bei der in Figur 3 dargestellten Ausführung ist vorgesehen, dass - insbesondere von einer Steuerungsvorrichtung 9 - als erster Schaltzeitpunkt 27 derjenige Zeitpunkt festgelegt wird, bei dem innerhalb der ersten Datenfolge 25 und/oder innerhalb eines ersten Datenwortes ein Wechsel von einem unteren standardisierten Signal, also 0, zu einem oberen standardisierten Signal, also 1, vorliegt.

Analog wird als jeweils ein zweiter Schaltzeitpunkt 28 in Bezug auf die zweite Datenfolge 26 als zweite Schaltzeitpunkte 28 desjenigen Zeitpunkts festgelegt, bei denen innerhalb der zweiten Datenfolge 26 und/oder innerhalb eines zweiten Datenwortes ein Wechsel von einem unteren standardisierten Signal, also 0, zu einem oberen standardisierten Signal, also 1, vorliegt.

Figur 4 zeigt eine andere Ausführung, die insbesondere bei der Verwendung von Proprotionaldiskriminatoren vorteilhaft verwendbar ist. Bei dieser Ausführung ist vorgesehen, dass - insbesondere von einer Steuerungsvorrichtung 9 - als erster Schaltzeitpunkt 27 derjenige Zeitpunkt festgelegt wird, der sich als arithmetisches Mittel aus dem Zeitpunkt eines ersten Wechsels von einem unteren standardisierten Signal zu einem oberen standardisierten Signal und aus dem Zeitpunkt eines zweiten Wechsels von einem oberen standardisierten Signal zu einem unteren standardisierten Signal innerhalb der ersten Datenfolge 25 und/oder innerhalb des ersten Datenwortes, errechnet. Analog werden auch die zweiten Schaltzeitpunkte 28 als arithmetische Mittel der Zeitpunkte der entsprechenden Wechsel innerhalb der zweiten Datenfolge 26 errechnet.

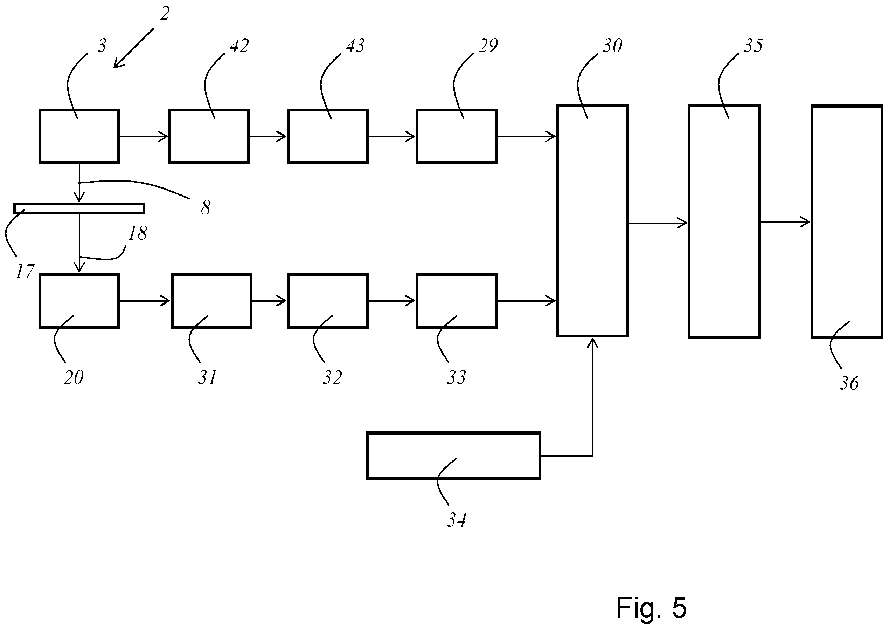

Figur 5 zeigt eine schematische Darstellung eines Ausführungsbeispiels, in der die einzelnen Komponenten übersichtlich als Kästchen dargestellt sind. Eine Probe 17 wird mit Beleuchtungslicht 8 einer Lichtquelle 2 beleuchtet, die als Pulslaser 3 ausgebildet ist. Gleichzeitig wird ein erstes analoges elektrisches Signal erzeugt, dessen Amplitude zur Lichtleistung des Beleuchtungslichtes 8 proportional ist. Das erste analoge elektrische Signal wird zur Signalaufbereitung an einen ersten Proportionaldiskriminator 42 übergeben. Das aufbereitete, erste analoge elektrische Signal gelangt anschließend zu einem ersten Komparator 43 der eine erste digitale Datenfolge durch zeitliches Abtasten des ersten analogen Signals erzeugt.

Die erste digitale Datenfolge wird an einen ersten Seriell-parallel-Wandler 29 übergeben, der erste parallele Datenworte erzeugt. Die Datenworte repräsentieren dabei jeweils einen Messezeitraum, der genauso lang ist, wie der zeitliche Abstand aufeinander folgender Anregungslichtpulse. Die Datenworte werden anschließend an eine Zuordnungseinheit 30 übergeben.

Ein Detektor 20 empfängt das von der Probe 17 ausgehende Detektionslicht 18 und erzeugt ein zweites analoges elektrisches Signal, das zur Signalaufbereitung an einen zweiten Proportionaldiskriminator 31 übergeben wird. Das aufbereitete zweite analoge elektrische Signal gelangt anschließend zu einem zweiten Komparator 32 der eine zweite digitale Datenfolge durch zeitliches Abtasten des zweiten analogen Signals erzeugt. Die zweite digitale Datenfolge wird an einen zweiten Seriell-parallel-Wandler 33 übergeben, der zweite parallele Datenworte erzeugt. Die zweiten Datenworte repräsentieren dabei jeweils einen Messezeitraum, der genauso lang ist, wie der zeitliche Abstand aufeinander folgender Anregungslichtpulse. Die zweiten Datenworte werden anschließend ebenfalls an eine Zuordnungseinheit 30 übergeben.

Von einer Scan-Steuerungseinheit 34 werden Pixeldaten, die dem aktuell untersuchten Probenbereich zugeordnet sind, bereitgestellt und ebenfalls an die Zuordnungseinheit 30 übergeben.

Die Zuordnungseinheit 30 ordnet die ersten Datenworte, die zweiten Datenworte und die Pixeldaten innerhalb von Datenpaketen einander zu. Die Datenpakete werden anschließend an einer Einheit 35 zum Ermitteln der Schaltzeitpunkte und zum Errechnen der zeitlichen Differenz zwischen den ersten und zweiten Schaltzeitpunkten übergeben. In der Einheit 35 wird zusätzlich jeweils auch eine Häufigkeitsverteilung der zeitlichen Differenz berechnet. Die berechneten Daten und Informationen werden an einen Speicher 36 übergeben und dort abgelegt. Es besteht die Möglichkeit, die Daten und Informationen zu einem späteren Zeitpunkt offline weiter auszuwerten. Alternativ oder zusätzlich können die Daten auch während des Experimentes online - beispielsweise in Form einer FLIM-Abbildung - dem Benutzer angezeigt werden.

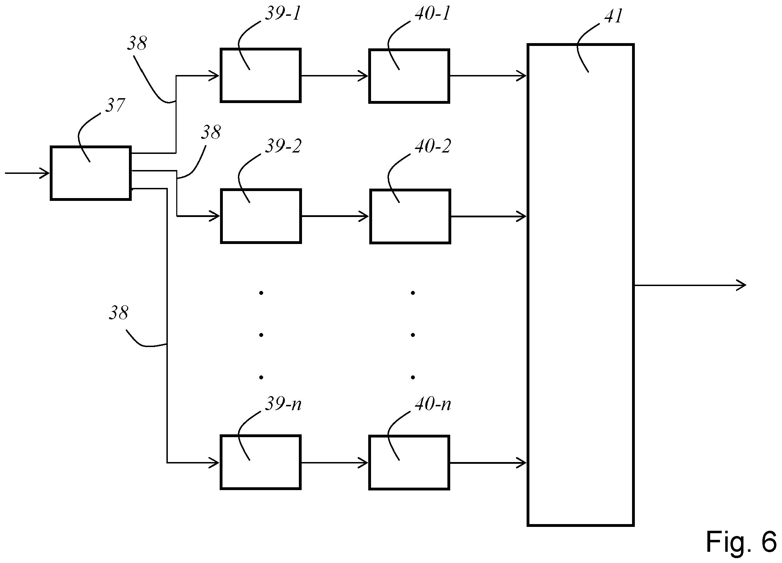

Fig. 6 zeigt eine schematische Darstellung der Abläufe zur Erhöhung der zeitlichen Auflösung bei der Abtastung eines ersten und/oder zweiten analogen elektrischen Signals. Hierbei wird das jeweilige analoge elektrische Signal von einem Komparator 37 - wie oben ausführlich beschrieben - in n identische digitale Datenfolgen 38 umgesetzt. Jede der digitalen Datenfolgen 38 durchläuft eine Verzögerungsstufe39-1 bis 39-n, wobei die Verzögerungsstufen 39-1 bis 39-n die jeweilige digitale Datenfolge 38 unterschiedlich verzögert. Die Verzögerungszeit der Verzögerungsstufe 39- x unterscheidet sich von der Verzögerungszeit der nächsten Verzögerungsstufe 39-(x+1) um einen Zeitversatz, der dem n-ten Bruchteil eines Zeitrasterabschnitts entspricht. Anschließend werden die digitalen Datenfolgen 38 jeweils einem Seriell-Parallel-Wandler 40-1 bis 40-n übergeben, der jeweils digitale Datenworte erzeugt. Diese werden anschließend in einer Verrechnungs- und Zuordnungseinheit 41 miteinander verrechnet.

### Bezugszeichenliste

- 1: Scanmikroskop
- 2: Lichtquelle
- 3: Pulslaser
- 4: Primärlichtstrahl
- 5: Strahlteiler
- 6: Messstrahl
- 7: Anregungsdetektor
- 8: Anregungslichtstrahl
- 9: Steuerungsvorrichtung
- 10: Beleuchtungspinhole
- 11: Hauptstrahlteiler
- 12: Scanvorrichtung
- 13: Scanspiegel
- 14: Scanoptik
- 15: Tubusoptik
- 16: Mikroskopobjektiv
- 17: Probe
- 18: Detektionslicht
- 19: Detektionspinhole
- 20: Detektor
- 21: zeitlicher Leistungsverlauf des Anregungslichts
- 22: zeitlicher Leistungsverlauf des Detektionslichts
- 23: Photonenereignis
- 24: Anregungslichtpuls
- 25: erste digitale Datenfolge
- 26: zweite digitale Datenfolge
- 27: erster Schaltzeitpunkt
- 28: zweiter Schaltzeitpunkt
- 29: erster Seriell-Parallel-Wandler
- 30: Zuordnungseinheit
- 31: Proportionaldiskriminator
- 32: Komparator
- 33: zweiter Seriell-Parallel-Wandler
- 34: Scan-Steuerungseinheit
- 35: Einheit
- 36: Speicher
- 37: elektrisches Signal
- 38: digitale Datenfolge
- 39: Verzögerungsstufe
- 40: Seriell-Parallel-Wandler
- 41: Verrechnungs- und Zuordnungseinheit

## Patentansprüche

1. Verfahren zum Ermitteln eines zeitlichen Lichtleistungsverlaufs von aus einem Probenbereich ausgehenden Detektionslicht, **gekennzeichnet durch** folgende Schritte:
a. Erzeugen eines Anregungslichtpulses und Beleuchten eines Probenbereichs mit dem Anregungslichtpuls,
b. Erzeugen einer ersten digitalen Datenfolge, die den zeitlichen Lichtleistungsverlauf des Anregungslichtpulses repräsentiert,
c. Ermitteln eines ersten Schaltzeitpunktes aus der ersten digitalen Datenfolge,
d. Detektieren des von dem Probenbereich ausgehenden Detektionslichtes als mindestens ein Photonenereignis mit einem Detektor,
e. Erzeugen einer zweiten digitalen Datenfolge, die den zeitlichen Lichtleistungsverlauf des Detektionslichtes repräsentiert,
f. Ermitteln eines zweiten Schaltzeitpunktes aus der zweiten digitalen Datenfolge und
g. Berechnen der zeitlichen Differenz zwischen dem ersten und dem zweiten Schaltzeitpunkt.

2. Verfahren nach Anspruch 1, **dadurch gekennzeichnet, dass**
a. die Schritte a bis g zyklisch wiederholt werden und/oder dass
b. die Schritte a bis g mit einer konstanten Repetitionsfrequenz zyklisch wiederholt werden.

3. Verfahren nach Anspruch 1 oder 2, **dadurch gekennzeichnet, dass**
a. der Anregungslichtpuls einem Primärlichtpuls entstammt von dem ein Teil einem Anregungsdetektor zugeführt wird, der ein erstes analoges elektrisches Signal erzeugt, dessen zeitlicher Amplitudenverlauf vom zeitlichen Verlauf der Lichtleistung des Teils des Primärlichtpulses abhängt, wobei das erste analoge elektrische Signal zum Erzeugen der ersten digitalen Datenfolge zeitlich - insbesondere in vorgegebenen und/oder vorgebbaren ersten Zeitrasterabschnitten - abgetastet wird, und/oder dass
b. der Detektor ein zweites analoges elektrisches Signal erzeugt, dessen zeitlicher Amplitudenverlauf vom zeitlichen Verlauf der Lichtleistung des Detektionslichtes abhängt, wobei das zweite analoge elektrische Signal zum Erzeugen der zweiten digitalen Datenfolge zeitlich - insbesondere in vorgegebenen und/oder vorgebbaren zweiten Zeitrasterabschnitten - abgetastet wird.

4. Verfahren nach Anspruch 3, **dadurch gekennzeichnet, dass** die erste Datenfolge und/oder die zweite Datenfolge aus standardisierten elektrischen Signalen, insbesondere Binärziffern, derart erzeugt wird, dass entweder ein unteres standardisiertes Signal erzeugt wird, wenn die gerade abgetastete Amplitude unterhalb einer festgelegten und/oder festlegbaren ersten Anregungsschwelle liegt, oder ein oberes, vom unteren standardisierten Signal verschiedenes standardisiertes Signal erzeugt wird, wenn die gerade abgetastete Amplitude oberhalb eine festgelegten und/oder festlegbaren zweiten Anregungsschwelle liegt.

5. Verfahren nach Anspruch 3 oder 4, **dadurch gekennzeichnet, dass**
a. das erste und/oder das zweite analoge elektrische Signal mit einer Abtastfrequenz abgetastet wird, die wesentlich größer ist, die vorzugsweise mehr als 50 mal oder mehr als 100 mal oder ca. 125 mal größer ist, als die Repetitionsfrequenz oder dass
b. das erste und/oder das zweite analoge elektrische Signal mit einer Abtastfrequenz von 10 GHz abgetastet wird, während die Repetitionsfrequenz 80 MHz beträgt.

6. Verfahren nach einem der Ansprüche 3 bis 5, **dadurch gekennzeichnet, dass** zur Erhöhung der zeitlichen Auflösung
a. das erste analoge elektrische Signal und/oder das zweite analoge elektrische Signal mehrmals abgetastet wird oder dass
b. das erste analoge elektrische Signal und/oder das zweite analoge elektrische Signal mehrmals, jedoch mit einem - insbesondere stufenlos einstellbaren - Zeitversatz, der kürzer ist, als ein Zeitrasterabschnitt, oder mit einem Zeitversatz, der dem n-ten Bruchteil eines Zeitrasterabschnitts entspricht, abgetastet wird oder dass
c. die Abtastergebnisse der mehrmaligen Abtastungen miteinander zu der ersten Datenfolge bzw. zu der zweiten Datenfolge verrechnet, insbesondere ineinander verkämmt, werden.

7. Verfahren nach einem der Ansprüche 1 bis 6, **dadurch gekennzeichnet, dass**
a. das Erzeugen der ersten digitalen Datenfolge mit einer ersten Abtastvorrichtung erfolgt, die einen Komparator und/oder einen Proportionaldiskriminator aufweist und/oder dass
b. das Erzeugen der zweiten digitalen Datenfolge mit einer zweiten Abtastvorrichtung erfolgt, die einen Komparator und/oder einen Proportionaldiskriminator aufweist.

8. Verfahren nach einem der Ansprüche 1 bis 7, **dadurch gekennzeichnet, dass**
a. die erste Datenfolge, insbesondere mit einem ersten Seriell-Parallel-Wandler, in parallele erste Datenworte umgesetzt wird und/oder dass die zweite Datenfolge, insbesondere mit einem zweiten Seriell-Parallel-Wandler, in parallele zweite Datenworte umgesetzt wird und dass
b. vorzugsweise die Datenworte jeweils einen Messzeitraum repräsentieren, der mindestens so lang ist, insbesondere genauso lang ist, wie der zeitliche Abstand aufeinanderfolgender Anregungslichtpulse.

9. Verfahren nach einem der Ansprüche 1 bis 8, **dadurch gekennzeichnet, dass**,
a. als erster Schaltzeitpunkt derjenige Zeitpunkt festgelegt wird, bei dem innerhalb der ersten Datenfolge und/oder innerhalb eines ersten Datenwortes ein Wechsel von einem unteren standardisierten Signal zu einem oberen standardisierten Signal oder ein Wechsel von einem oberen standardisierten Signal zu einem unteren standardisierten Signal vorliegt, oder der aus dem Zeitpunkt eines ersten Wechsels von einem unteren standardisierten Signal zu einem oberen standardisierten Signal und aus dem Zeitpunkt eines zweiten Wechsels von einem oberen standardisierten Signal zu einem unteren standardisierten Signal innerhalb der ersten Datenfolge und/oder innerhalb des ersten Datenwortes, insbesondere durch Bildung des arithmetischen Mittels der Zeitabstände der Wechsel, errechnet wird, und/oder dass
b. als zweiter Schaltzeitpunkt derjenige Zeitpunkt festgelegt wird, bei dem innerhalb der zweiten Datenfolge und/oder innerhalb eines zweiten Datenwortes ein Wechsel von einem unteren standardisierten Signal zu einem oberen standardisierten Signal oder ein Wechsel von einem oberen standardisierten Signal zu einem unteren standardisierten Signal vorliegt, oder der aus dem Zeitpunkt eines ersten Wechsels von einem unteren standardisierten Signal zu einem oberen standardisierten Signal und aus dem Zeitpunkt eines zweiten Wechsels von einem oberen standardisierten Signal zu einem unteren standardisierten Signal innerhalb der zweiten Datenfolge und/oder innerhalb eines zweiten Datenwortes, insbesondere durch Bildung des arithmetischen Mittels der Zeitabstände der Wechsel, errechnet wird, und/oder dass
c. wenigstens eine Häufigkeitsverteilung mehrerer errechneter zeitlicher Differenzen generiert wird.

10. Verfahren nach einem der Ansprüche 1 bis 9, **dadurch gekennzeichnet, dass**
a. sequentiell aufeinanderfolgend unterschiedliche, insbesondere benachbarte und/oder benachbart in einer Scanzeile angeordnete, Probenbereiche hinsichtlich einer Lebensdauer eines angeregten Zustandes untersucht werden, wobei vorzugsweise den Datenfolgen und/oder Datenworten und/oder Häufigkeitsverteilungen und/oder zeitlichen Differenzen jedes Probenbereichs eine Ortsinformation hinzugefügt wird oder dass
b. sequentiell aufeinanderfolgend unterschiedliche, insbesondere benachbarte und/oder benachbart in einer Scanzeile angeordnete, Probenbereiche hinsichtlich der Lebensdauer eines angeregten Zustandes untersucht werden und ein Fluorescence-Lifetime-Image (FLIM) der Probe erzeugt wird.

11. Vorrichtung zur Ausführung eines Verfahrens nach einem der Ansprüche 1 bis 10.

12. Vorrichtung zum Ermitteln eines zeitlichen Lichtleistungsverlaufs von aus einem Probenbereich ausgehenden Detektionslicht, mit einer Lichtquelle zum Erzeugen eines Anregungslichtpulses zum Beleuchten eines Probenbereichs mit dem Anregungslichtpuls und mit einem Detektor zum Detektieren des von dem Probenbereich ausgehenden Detektionslichtes als mindestens ein Photonenereignis, wobei eine Steuerungsvorrichtung vorgesehen ist, die dazu ausgebildet ist,
a. eine erste digitale Datenfolge, die den zeitlichen Lichtleistungsverlauf des Anregungslichtpulses repräsentiert, zu erzeugen,
b. aus der ersten digitalen Datenfolge einen ersten Schaltzeitpunkt zu ermitteln,
c. eine zweite digitale Datenfolge zu erzeugen, die den zeitlichen Lichtleistungsverlauf des Detektionslichtes repräsentiert,
d. aus der zweiten digitalen Datenfolge einen zweiten Schaltzeitpunkt zu ermitteln und
e. die zeitliche Differenz zwischen dem ersten und dem zweiten Schaltzeitpunkt zu berechnen.

13. Vorrichtung nach Anspruch 12, **dadurch gekennzeichnet, dass**
a. die Vorrichtung Teil eines Scanmikroskops, insbesondere eines konfokalen Scanmikroskops ist, oder dass
b. die Lichtquelle eine Folge von Anregungslichtpulsen, insbesondere einer konstanten Repetitionsfrequenz, erzeugt und dass die die Steuerungsvorrichtung die Schritte a bis e zyklisch wiederholt, oder dass
c. die Lichtquelle einen Primärlichtstrahl erzeugt, der mit einem Strahlteiler in einen Anregungslichtstrahl, der die Anregungslichtpulse beinhaltet, und einen Messstrahl aufgespalten wird, wobei ein Anregungsdetektor den Messstrahl empfängt und ein erstes analoges elektrisches Signal erzeugt, dessen zeitlicher Amplitudenverlauf vom zeitlichen Verlauf der Lichtleistung des Messstrahles abhängt, und wobei die Steuerungsvorrichtung das erste analoge elektrische Signal zum Erzeugen der ersten digitalen Datenfolge zeitlich - insbesondere in vorgegebenen und/oder vorgebbaren ersten Zeitrasterabschnitten - abtastet, oder dass
d. der Detektor ein zweites analoges elektrisches Signal erzeugt, dessen zeitlicher Amplitudenverlauf vom zeitlichen Verlauf der Lichtleistung des Detektionslichtes abhängt, und dass die Steuerungsvorrichtung das zweite analoge elektrische Signal zum Erzeugen der zweiten digitalen Datenfolge zeitlich - insbesondere in vorgegebenen und/oder vorgebbaren zweiten Zeitrasterabschnitten - abtastet.

14. Vorrichtung nach Anspruch 13, **dadurch gekennzeichnet, dass** die Steuerungsvorrichtung die erste Datenfolge und/oder die zweite Datenfolge aus standardisierten elektrischen Signalen, insbesondere Binärziffern, derart erzeugt, dass entweder ein unteres standardisiertes Signal erzeugt wird, wenn die gerade abgetastete Amplitude unterhalb einer festgelegten und/oder festlegbaren ersten Anregungsschwelle liegt, oder ein oberes, vom unteren standardisierten Signal verschiedenes standardisiertes Signal erzeugt wird, wenn die gerade abgetastete Amplitude oberhalb eine festgelegten und/oder festlegbaren zweiten Anregungsschwelle liegt.

15. Vorrichtung nach Anspruch 13, **dadurch gekennzeichnet, dass** die Steuerungsvorrichtung
a. das erste und/oder das zweite analoge elektrische Signal mit einer Abtastfrequenz abtastet, die wesentlich größer ist, die vorzugsweise mehr als 50 mal oder mehr als 100 mal oder ca. 125 mal größer ist, als die Repetitionsfrequenz oder dass
b. das erste und/oder das zweite analoge elektrische Signal mit einer Abtastfrequenz von 10 GHz abtastet, während die Repetitionsfrequenz 80 MHz beträgt.

16. Vorrichtung nach einem der Ansprüche 13 bis 15, **dadurch gekennzeichnet, dass**
a. die Steuerungsvorrichtung zur Erhöhung der zeitlichen Auflösung das erste analoge elektrische Signal und/oder das zweite analoge elektrische Signal mehrmals abtastet oder dass
b. die Steuerungsvorrichtung zur Erhöhung der zeitlichen Auflösung das erste analoge elektrische Signal und/oder das zweite analoge elektrische Signal mehrmals, jedoch mit einem Zeitversatz, der kürzer ist, als ein Zeitrasterabschnitt, oder n mal jedoch mit einem Zeitversatz, der dem n-ten Bruchteil eines Zeitrasterabschnitts entspricht, abtastet, der kürzer ist, als ein Zeitrasterabschnitt, oder dass
c. die Steuerungsvorrichtung die Abtastergebnisse der mehrmaligen Abtastungen miteinander zu der ersten Datenfolge bzw. zu der zweiten Datenfolge verrechnet, insbesondere ineinander verkämmt.

17. Vorrichtung nach einem der Ansprüche 13 bis 16, **dadurch gekennzeichnet, dass**
a. das Erzeugen der ersten digitalen Datenfolge mit einer ersten Abtastvorrichtung erfolgt, die einen Komparator und/oder einen Proportionaldiskriminator aufweist, und/oder dass
b. das Erzeugen der zweiten digitalen Datenfolge mit einer zweiten Abtastvorrichtung erfolgt, die einen Komparator und/oder einen Proportionaldiskriminator aufweist, und/oder dass
c. ein erster Seriell-Parallel-Wandler zum Umsetzen der ersten Datenfolge in parallele erste Datenworte vorgesehen ist und/oder dass ein zweiter Seriell-Parallel-Wandler zum Umsetzen der zweiten Datenfolge in parallele zweite Datenworte vorgesehen ist, wobei vorzugsweise der erste und/oder der zweite Seriell-Parallel-Wandler Datenworte erzeugt, die jeweils einen Messzeitraum repräsentieren, der mindestens so lang ist, insbesondere genauso lang ist, wie der zeitliche Abstand aufeinanderfolgender Anregungslichtpulse.

18. Vorrichtung nach einem der Ansprüche 12 bis 17, **dadurch gekennzeichnet, dass**
a. die Steuervorrichtung als ersten Schaltzeitpunkt denjenigen Zeitpunkt festgelegt, bei dem innerhalb der ersten Datenfolge und/oder innerhalb eines ersten Datenwortes ein Wechsel von einem unteren standardisierten Signal zu einem oberen standardisierten Signal oder ein Wechsel von einem oberen standardisierten Signal zu einem unteren standardisierten Signal vorliegt, oder dass die Steuervorrichtung den ersten Schaltzeitpunkt aus dem Zeitpunkt eines ersten Wechsels von einem unteren standardisierten Signal zu einem oberen standardisierten Signal und aus dem Zeitpunkt eines zweiten Wechsels von einem oberen standardisierten Signal zu einem unteren standardisierten Signal innerhalb der ersten Datenfolge und/oder innerhalb des ersten Datenwortes, insbesondere durch Bildung des arithmetischen Mittels, errechnet, und/oder dass
b. die Steuervorrichtung als zweiten Schaltzeitpunkt denjenigen Zeitpunkt festgelegt, bei dem innerhalb der zweiten Datenfolge und/oder innerhalb eines zweiten Datenwortes ein Wechsel von einem unteren standardisierten Signal zu einem oberen standardisierten Signal oder ein Wechsel von einem oberen standardisierten Signal zu einem unteren standardisierten Signal vorliegt, oder dass die Steuervorrichtung den zweiten Schaltzeitpunkt aus dem Zeitpunkt eines ersten Wechsels von einem unteren standardisierten Signal zu einem oberen standardisierten Signal und aus dem Zeitpunkt eines zweiten Wechsels von einem oberen standardisierten Signal zu einem unteren standardisierten Signal innerhalb der zweiten Datenfolge und/oder innerhalb eines zweiten Datenwortes, insbesondere durch Bildung des arithmetischen Mittels, errechnet, und/oder dass
c. die Steuervorrichtung wenigstens eine Häufigkeitsverteilung mehrerer errechneter zeitlicher Differenzen generiert.

19. Vorrichtung nach einem der Ansprüche 12 bis 18, **dadurch gekennzeichnet, dass**
a. eine Scaneinrichtung zum Lenken des Anregungslichtes auf unterschiedliche Probenorte und/oder zum Abrastern einer Probe vorgesehen ist, wobei vorzugsweise die Steuerungsvorrichtung Ortsinformationen bezüglich der jeweiligen Stellung der Scaneinrichtung den Datenfolgen und/oder Datenworten und/oder Häufigkeitsverteilungen und/oder zeitlichen Differenzen jedes Probenbereichs hinzufügt oder dass
b. die Steuerungsvorrichtung und/oder wenigstens eine der Abtastvorrichtungen und/oder wenigstens einer der Seriell-Parallel-Wandler Bestandteile eines programmierbaren integrierten Schaltkreises, insbesondere eines Field Programmable Gate Array (kurz: FPGA), sind.

20. Scanmikroskop mit einer Vorrichtung nach einem der Ansprüche 12 bis 19.
